# EUROPÄISCHE PATENTANMELDUNG

(11) **EP 3 591 259 A1**
(43) Veröffentlichungstag der Anmeldung: **08.01.2020**
(21) Anmeldenummer: 19182288.1
(22) Anmeldetag: 25.06.2019
(51) Int. Cl.: F16G 5/08, F16G 5/20

(54) **VERFAHREN ZUR HERSTELLUNG EINES KEILRIPPENRIEMENS MIT RIPPENBESCHICHTUNG**

(30) Priorität: 03.07.2018 DE 102018116084
(71) Anmelder: Arntz Beteiligungs GmbH & Co. KG, 37671 Höxter (DE)
(72) Erfinder: Murschel, Oleg, 33100 Paderborn (DE)
(74) Vertreter: Gramm, Lins & Partner Patent- und Rechtsanwälte PartGmbB

(57) **Zusammenfassung**

Das Verfahren zur Herstellung eines Keilrippenriemens (10) mit einer Rippenbeschichtung (6) arbeitet mit Hilfe eines konventionellen Formverfahrens, bei dem ein mehrschichtiger, schlauchförmiger Riemenwickel (20), der wenigstens eine Schicht (3',4') aus einem zu einem Elastomer härtbaren Material für die Ausbildung eines Riemenkörpers (2) und daran ausgebildeten Keilrippen (33) aufweist, in einer Form mit einer Struktur für ein Formen der Keilrippen (33) geformt wird, wobei eine zelligporöse Außenschicht (6') des Riemenwickels (20) aus einem Thermoplasten, insbesondere einer zellig-porösen Thermoplast-Folie, während des Formens unter wenigstens teilweisem Verlust ihrer Porosität erweicht oder aufgeschmolzen wird, um an dem entformten Keilrippenriemen (10) eine homogene, dünne Oberflächenbeschichtung gleichförmiger Dicke zu bilden - die Rippenbeschichtung (6). Der zugehörige Keilrippenriemen (10) besitzt im Vergleich zu Riemen mit anders aufgebrachten Rippenbeschichtungen (6) aus entsprechendem Grundmaterial (nicht-porös) bei gleicher Schichtdicke ein verbessertes Verhalten bezüglich der Geräuschentwicklung und bestimmten dynamischen Belastungswerten.

## Beschreibung

Die Erfindung betrifft ein Verfahren zur Herstellung eines Keilrippenriemens mit einer vorzugsweise thermoplastischen Oberflächenbeschichtung der Rippen (Rippenbeschichtung) in einem Formverfahren und betrifft weiter einen zugehörigen Keilrippenriemen.

Dem Fachmann sind Formverfahren für die Herstellung von Kraftübertragungsriemen im Allgemeinen und Keilrippenriemen im Besonderen bekannt.

Alternativ können Keilrippenriemen auch im sogenannten "Schleifverfahren" hergestellt werden. Dabei werden die Rippen nach schichtförmigem Aufbau und Härten bzw. Vulkanisieren eines kompakten Riemenrohlings aus dem Rippenelastomer herausgeschliffen. Für Riemen, die auf den Rippen und damit auf der Kraftübertragungsseite des Riemens eine Beschichtung z.B. aus einem fließfähigen oder warmverformbaren Material, wie einem Thermoplasten oder thermoplastischen Elastomer, tragen sollen - im Nachfolgenden Rippenbeschichtung genannt - ist eine Herstellung im Schleifverfahren nicht möglich. Vielmehr müsste die Beschichtung nachträglich auf den fertig geschliffenen Riemen aufgebracht werden, was gerade für dünne Beschichtungen auf Keilrippen nicht oder nur in unzulänglicher Qualität gelingt.

Eine nachträgliche Beschichtung könnte beispielsweise aufgesprüht werden, was jedoch in der Regel zu einer ungleichmäßigen Beschichtung der steilen Flanken enger Keilrippenrillen im Vergleich zur Beschichtungsdicke in den Rippengrunden und auf den Rippenspitzen führt. Hierdurch ergeben sich große Probleme mit der Haltbarkeit und mechanischen Belastbarkeit der Riemen, weil sich die dünner beschichteten Bereiche schneller abnutzen.

Eine nachträgliche Beschichtung mit einem thermoplastischen Material wird häufig mit Hilfe von Folien verwirklicht, die auf den zu beschichtenden Gegenstand aufgelegt und dann dort aufgeschmolzen werden. Für die rippenseitige Beschichtung eines Keilrippenriemens ist dies ebenfalls praktisch nicht zu verwirklichen. Selbst in dem Fall, dass die Folie genügend elastisch wäre, um sich bis in die Rippengründe hineindrücken zu lassen, ergäbe sich dabei eine ungleichmäßig dicke Beschichtung mit den oben schon angegebenen Nachteilen.

Die unmittelbare rippenseitige Beschichtung von Keilrippenriemen ist jedoch auch in einem Formverfahren nicht leicht zu bewerkstelligen. Zwar lässt sich die spätere Rippenbeschichtung als Schicht in den mehrlagigen Aufbau eines Riemenwickels (eines Schichtkörpers, der in einer Form unter Wärmezufuhr zu der Riemenstruktur ausgeformt wird) integrieren, das Heißformen einer dünnen Beschichtung auf Keilrippen bringt jedoch ebenfalls Probleme mit sich, wie sie u. a. vom Folientiefziehen in enge und tiefe Formen bekannt sind: Entlang der Flanken und im Rippengrund wird das in gleichmäßiger Schichtdicke auf den Wickel aufgebrachte Material gestreckt, und die dort ausgebildete Rippenbeschichtung wird dünner sein als auf den Rippenspitzen. Es ergeben sich also wieder die zuvor schon ausgeführten Nachteile.

Gerade auf den Rippenflanken darf eine Rippenbeschichtung nicht mangelhaft und zu dünn ausgebildet sein, da die Kraftübertragung von der Rippenscheibe auf die Rippen in erster Linie über die Rippenflanken geschieht. Eine ausreichend und gleichmäßig dicke, fest angeformte Beschichtung ist unbedingt erforderlich.

Aus der EP 1 384 013 B1 ist bereits ein Formverfahren bekannt, bei dem eine Folie aus einem thermoplastischen Material, nämlich eine Folie aus Polyethylen mit ultrahohem Molekulargewicht (UHMWPE-Folie), unmittelbar während des Heißformens auf den Zähnen eines Zahnriemens aufgeschmolzen wird. Das Verfahren ist speziell für Zahnriemen ausgelegt und ist für Keilrippenriemen nicht geeignet.

Aus der WO 2009/034748 A1 ist die Herstellung eines Keilrippenriemens bekannt, bei dem eine Textilauflage während eines Heißformvorgangs auf den Rippen fixiert wird. Für das als solches bekannte und konventionell ausgeführte Formverfahren wird wie üblich ein Riemenwickel vorbereitet, der sämtliche für den Riemen erforderlichen Materialien, einschließlich einer Zugträgerlage mit spiralförmig gewickelten Cordsträngen, übereinander geschichtet enthält. Die spätere Textilauflage wird als äußerste Schicht des Riemenwickels vorgelegt. Für das Verfahren ist es erforderlich, dass die Textilauflage stark dehnbar ist, und zwar in zwei vorgegebene Richtungen, um sich während des Formens an die Rippenkontur anpassen zu können. Die Textilauflage bleibt dennoch als Abriebschutz funktionsfähig. Das Verfahren ist für die Herstellung eines Keilrippenriemens mit einer Rippenbeschichtung in Form bekannter thermoplastischer Folien wenig geeignet.

Ein weiterer wesentlicher Problempunkt ist die Haftung des Beschichtungsmaterials auf der Rippenoberfläche. Diese Haftung ist bei bekannten Materialkombinationen nicht immer befriedigend. Beispielsweise ist die Haftung einer Polyethylenbeschichtung auf einem CR-Riemen in der Regel weniger befriedigend. Im Stand der Technik werden daher häufig Klebstoffe oder Haftvermittler eingesetzt. Die Haftvermittler können dünner aufgetragen werden als die Klebstoffe, erfordern aber organische Lösungsmittel, die beim Härten entweichen und aus ökologischer Sicht vermieden werden sollten.

Es besteht weiterhin ein großes Bedürfnis, die Rippen von Keilrippenriemen, deren vorrangiges Anwendungsgebiet in der Getriebe- und Antriebstechnik liegt, mit gleichmäßig dicken, homogen aufliegenden Oberflächenbeschichtungen (Rippenbeschichtungen) aus thermoplastischen Materialien versehen zu können, um mit Hilfe der Oberflächenbeschichtung zusätzliche Eigenschaften und bestimmte Zusatznutzen zu erzielen, wie beispielsweise Geräuschreduktion, Reibwertreduktion, erhöhte Abrieb- und Verschleißfestigkeit und dergleichen.

Die Aufgabe der Erfindung besteht demnach darin, ein Verfahren für die Oberflächenbeschichtung von Keilrippenriemen auf der Kraftübertragungsseite, d.h., ein Verfahren für die Erzeugung einer homogenen Rippenbeschichtung zur Verfügung zu stellen, das für das gleichmäßige Aufbringen thermoplastischer Beschichtungsmaterialien geeignet ist und eine optimal angebundene Oberflächenbeschichtung mit einheitlicher Schichtdicke erzeugt.

Gemäß einem weiteren Aspekt soll die Rippenbeschichtung ohne Verwendung von Klebstoffen oder Haftvermittlern, die im Stand der Technik häufig zwischen Rippenelastomer und Rippen-Oberflächenbeschichtung in den Schichtaufbau eingefügt werden, aufbringbar sein.

Die Aufgabe wird mit dem Verfahren (Formverfahren, bzw. Heißformverfahren) nach Anspruch 1 und dem dadurch erzeugten Keilrippenriemen nach Anspruch 9 gelöst.

Zum Kern der Erfindung gehört, dass mit einem als solches konventionellen Formverfahren ein Keilrippenriemen mit einer rippenseitigen thermoplastischen Oberflächenbeschichtung (Rippenbeschichtung) hergestellt werden kann, wobei die Rippenbeschichtung Eigenschaften aufweist, die anders nicht oder zumindest nicht auf so einfache Weise erzielt werden könnten.

Dies wird bei der Erfindung dadurch erreicht, dass die spätere Beschichtung innerhalb des Konfektionswickels (Riemenwickels) durch eine Schicht gebildet wird, die porös ist und dabei eine Zellstruktur aufweist - hier als zellig-porös bezeichnet - und dass diese poröse Schicht in dem (Heiß-)Formverfahren auf der Rippenstruktur des Keilrippenriemens unter Porositätsverlust erweicht oder aufschmilzt, sich dabei an die Rippen optimal anschmiegt und sich gut haftend mit den Rippen verbindet.

Die Verwendung einer porösen, insbesondere einer hoch-porösen und beispielsweise einer geschäumten Schicht als Vorläufer für die Rippenbeschichtung führt nach derzeitiger Erkenntnis aus zweierlei Gründen zu einer gleichmäßig dicken und optimal angebundenen Beschichtung.

Erstens führt die größere Schichtdicke der porösen Schicht im Vergleich zu einer nicht-porösen Vergleichsschicht bei gleicher Materialmasse zu einer gleichmäßig dicken Beschichtung, selbst an Stellen schwieriger Pressform-Geometrie, wie an den engen Krümmungsradien der Matrize für die späteren Rippenrillen, weil sich das Beschichtungsmaterial während des Fließens im Aufschmelz- oder Erweichungsprozess besser verteilen kann.

Wie ohne Beschränkung auf eine Theorie derzeit angenommen wird, kann sich zweitens ein noch nicht vulkanisiertes elastomeres oder ein thermoplastisches Riemenmaterial für den Rippenbereich, wie es an der Oberfläche des Wickels, unterhalb der porösen Schicht vorliegt, vermutlich durch Einfließen bzw. Hineingedrücktwerden in offene Poren des Beschichtungsmaterials mit diesem besonders gut verbinden. Weiterhin wird die verbesserte Haftung durch eine größere Kontaktfläche zwischen Riemenmaterial und Beschichtungsmaterial erreicht, wodurch die chemische und physikalische Anbindung verbessert wird. Hierauf lassen zumindest die unten ausgeführten überraschend positiven Ergebnisse der mechanisch-dynamischen Belastungsprüfung schließen.

Konkret ist das erfindungsgemäße Verfahren gemäß Oberbegriff ein Verfahren zur Herstellung eines Keilrippenriemens mit einer Rippenbeschichtung in einem Formverfahren (moulding, auch als Prägeverfahren bezeichnet), bei dem ein mehrschichtiger, schlauchförmiger Riemenwickel, der für die Ausbildung eines Riemenkörpers und daran ausgebildeter Keilrippen wenigstens eine Schicht aus einem zu einem Elastomer härtbaren Material, also aus einem Kautschuk oder Synthese-Kautschuk, aufweist, zu einem Riemenrohling oder einem (fertigen) Keilrippenriemen ausgeformt wird. Ein Riemenrohling läge beispielsweise in dem Falle vor, dass der entformte Riemen noch auf Breite geschnitten werden muss. Es ist nicht üblich, aber möglich einzelne Endlosriemen auf je einer Trommel oder auf separaten Trommelabschnitten zu formen. Letzteres kommt insbesondere für sehr breite Riemen mit vielen Rippen in Betracht.

Das Formen ist ein Heißformen, wobei die Wärmezufuhr geeignet sein muss, um alle Materialien, die geformt und dabei in ihrer äußeren Formgestalt verändert werden sollen, mindestens zu erweichen und warmformbar zu machen oder aufzuschmelzen. Die anzuwendende Temperatur ergibt sich demnach aus den Erweichungs- und Schmelzbereichen der jeweiligen Materialien, bei denen es sich um noch nicht vulkanisierte reine "Elastomere" wie Kautschuke und Synthese-Kautschuke, thermoplastische Elastomere und/oder härtbare bzw. vernetzbare thermoplastische Präpolymere handeln kann, zusammen vor wie nach dem Härten kurz als Materialklasse Riemenelastomere bezeichnet.

Als Riemenelastomere kann der Fachmann alle bekannten Materialien verwenden. Dies richtet sich, ebenso wie Größe und Profil des Riemens und genauer Schichtaufbau nach dem Anwendungszweck und ist keinen besonderen Beschränkungen unterworfen. Mögliche Riemenelastomere für die Rippenzone oder den gesamten Riemenkörper sind EPM, EPDM, CR. Zusätzliche Schichten können vorhanden sein, zum Beispiel Zugträgereinbettungen oder Riemenrücken-Beschichtungen und -Textilauflagen.

Das Formen geschieht in als solches bekannter und konventioneller Weise in einer Form, nämlich einer zweiteiligen Form, mit einer Struktur für ein Formen der Keilrippen, die sich bei verschiedenen bekannten Formverfahren entweder an der Innenform - auf einem Kern oder einer Trommel - oder an der Außenform - an der inneren Oberfläche einer Hülse - befinden kann. Dies ermöglicht die Verwendung bekannter Vorrichtungen. Neue Maschinen oder ein Maschinenumbau sind nicht erforderlich.

In die Form wird der oben beschriebene Riemenwickel eingebracht, und zwar zwischen einer im Wesentlichen zylindrischen Innenform und einer konzentrisch dazu angeordneten hülsenförmigen Außenform. Unter Verringerung des Ringspalts zwischen den beiden Formteilen und unter Anwendung von Wärme, wie oben beschrieben, wird das zu formende Material erweicht und aufgeschmolzen, wobei durch die Struktur der Form (auch Vulkanisationsform genannt) Keilrippen eingeprägt werden. Es entsteht ein Riemenrohling bzw. Keilrippenriemen, der vor dem Entformen abgekühlt und nach dem Entformen ggf. weiterbearbeitet und endbearbeitet wird.

Die Erfindung ist nun durch folgende Merkmale gekennzeichnet:
- - Die Außenform (nicht etwa eine Innenform) weist die Struktur für das Formen der Keilrippen an ihrer Hülseninnenfläche auf,
   wobei eine äußere Oberfläche des Riemenwickels und damit die Schicht mit der relativ größten nach außen gerichteten Oberfläche, und die Struktur der Hülseninnenfläche der Außenform gegeneinander gepresst werden.
- - Dabei wird wenigstens die Außenform beheizt.
- - Der Riemenwickel besitzt an seiner äußeren Oberfläche eine poröse Schicht mit Zellstruktur, die im Rahmen dieser Erfindung als zellig-poröse Schicht bezeichnet wird und deren eigene äußere Oberfläche zugleich die Riemenwickel-Oberfläche und die Kontaktfläche zur Prägestruktur der Außenform bildet.
- - Die zellig-poröse Schicht bzw. Riemenwickel-Außenschicht liegt auf (oberhalb) einer Kautschuk-Schicht im oben definierten Sinne, aus der die Keilrippen (33) ausgeformt werden. Die Rippenform - also das Ergebnis des Rippen-Ausformens manifestiert sich grundsätzlich in dem Material der Rippenzone, während die poröse Schicht zu einer reinen Oberflächenbeschichtung von im Wesentlichen gleichförmiger Schichtdicke wird.
- - Die zellig poröse Außenschicht wird während des Formens unter wenigstens teilweisem Verlust ihrer Porosität erweicht oder aufgeschmolzen und bildet an dem entformten Keilrippenriemen die Rippenbeschichtung.

Die Form, in der das erfindungsgemäße Verfahren durchgeführt wird, besteht aus einer im Wesentlichen zylindrischen Innenform und einer hülsenförmigen Außenform. Die Innenform kann, sofern das gewünscht ist, von ihrem kreisförmigen Durchmesser abweichen, zylindrische Formen, wie zylindrische Trommeln oder Kerne, sind jedoch am weitesten verbreitet und bevorzugt. Dabei sollen auch "zylindrisch wirkende Formen" zu den zylindrischen Formen zählen. Gemäß einer üblichen Verfahrensalternative kann für die zylindrische Innenform eine Hydromanschette verwendet werden, die durch Wasser expandiert wird und damit für den Druckaufbau sorgt, der den Wickel in die Außenform presst. Die hülsenförmige Außenform kann in eine Gesamtvorrichtung eingesetzt sein, die Hülse kann ganz oder teilweise umschlossen sein.

Das Verfahren wird so geführt, dass der Riemenwickel vorzugsweise während des Formens radial nach außen expandiert und gegen die Struktur der Hülseninnenfläche der Außenform gepresst wird. Der Begriff Außenform bezieht sich immer auf die Form auf der Rippenseite.

Für einen optimalen Effekt ist die Porosität der zellig-porösen Außenschicht des Riemenwickels bzw. Konfektionswickels hoch. Unter der Porosität versteht man dabei das Verhältnis des gesamten Hohlraumvolumens zum Gesamtvolumen des Werkstoffs, ausgedrückt in Prozent oder als dimensionsloser Bruchteil von 1.

Die Porosität der zellig-porösen Außenschicht beträgt vorzugsweise wenigstens 1 %, weiter vorzugsweise wenigstens 10 %, insbesondere 10 % - 90 %, wie 30 % - 90 % und besonders bevorzugt 75 % bis 85 %.

Die zellig-poröse Außenschicht des Riemenwickels wird in bevorzugten Ausführungsbeispielen durch zellig-poröse Folien bereitgestellt, also durch Folien mit einer offenporigen oder geschlossen porigen Zellstruktur, und bevorzugt durch geschäumte Folien. Die gewählte Folie wird auf den Riemenwickel einschichtig (auf Stoß) aufgelegt oder mehrschichtig aufgewickelt. Die zellig-porösen Folien sind bevorzugt geschäumte Folien (Schaumfolien).

Für die Außenschicht können mehrere Materialien gemischt werden, um beispielsweise in der fertigen Beschichtung ein Blend mit bestimmter Eigenschaftskombination zu erhalten, auch falls keine Folien verwendet werden.

In bevorzugten Ausführungsformen der Erfindung ist die zellig-poröse Folie eine Polyethylenfolie, bei anderer Auftragsweise als durch Folien ein Polyethylen (PE).

Polyethylenmaterialien sind für die Beschichtung von Riemen auf der Laufseite bekannt. Dies dient im Allgemeinen vorrangig zum Verschleißschutz. Der Fachmann kann unter diesen Materialien ohne Beschränkung auswählen.

In besonders bevorzugten Ausführungsformen der Erfindung ist die zellig-poröse Folie eine UHMWPE-Folie (Ultra High Molecular Weight-PE-Folie), bei anderer Auftragsweise als durch Folien allgemein ein UHMWPE. Das Molekulargewicht des UHMWPE kann dabei vorzugsweise im Bereich zwischen 3000000 (3 Mio) und 9000000 (9 Mio) g/Mol liegen.

UHMWPE-Materialien sind ebenfalls hinlänglich bekannt. Um in einem Fomverfahren eingesetzt werden zu können, sollten die Erweichungs- bzw. Schmelzbereiche zwischen ca. 125 und 145 °C liegen. Dabei handelt es sich um Temperaturen, bei denen diese Materialien auch im Spritzguss verarbeitbar wären.

Die zellig-poröse nämlich vorzugsweise geschäumte Außenschicht wird vorzugsweise mit einer Dicke von 0,015 bis 1,2 mm, weiter vorzugsweise 0,2 bis 0,4 mm, in dem Riemenwickel eingesetzt.

In einer Ausführungsform nimmt die Dicke der zellig-porösen, wie aufgeschäumten Schicht bei dem erfindungsgemäßen Verfahren um mindestens 20 %, wie mindestens 40 %, wie 50 %, z.B. um 60 % oder 70 % ab.

Die erzeugte Rippenbeschichtung weist vorzugsweise eine Dicke von 0,01 bis 1 mm, wie 0,02 bis 0,8 mm, auf, z.B. 0,02 bis 0,2 mm weiter vorzugsweise von 0,02 bis 0,08 mm, wie 0,03 bis 0,05 mm.

Gemäß einem ersten Aspekt der Erfindung besitzt der bei dem Verfahren verwendete mehrschichtige Riemenwickel von innen nach außen folgenden Aufbau:
- eine Rückenschicht - auch als Decklage oder Deckplatte bezeichnet - aus einem zu einem Elastomer härtbaren Material, vorzugsweise einem Kautschuk oder Synthesekautschuk, vorzugsweise einem Elastomer auf EPDM-Basis oder einem der u.a. Materialien der Kernschicht;
- eine Zugträgerschicht, vorzugsweise mit Zugträgern aus Synthesefasern, wie Polyester oder Aramid, wobei die Zugstränge vorzugsweise aus gezwirnten oder ungezwirnten Cordsträngen gebildet werden;
- eine Kernschicht für die Ausbildung eines Unterbaus - auch als Kompressionszone oder Kern bezeichnet - mit darin integrierten, eingeprägten Keilrippen, vorzugsweise M-Elastomer, CR-Kautschuk oder Neopren, besonders bevorzugt EPDM (jeweils einschließlich von Mischungen);
- eine zellig-poröse Außenschicht, vorzugsweise aus homogenem thermoplastischen Material, d.h. einem oder mehreren Homopolymeren, Copolymeren oder Mischungen daraus (Blends), vorzugsweise aus Polyethylen oder polyethylenhaltig, besonders bevorzugt aus einem UHMWPE.

Anstelle einzelner homogener bzw. homogen gemischter Materialien für die Schichten: Rückenschicht, Zugträgerschicht, Kernschicht und Außenschicht kann es sich an entsprechender Stelle auch um eine Kombination (d.h. einen Aufbau) wenigstens zweier geschichteter Materialien handeln, die im Falle der Außenschicht bevorzugt beide/alle porös sind.

Vorzugsweise ist das Elastomer-Material für den Riemenkörper einheitlich. Bei einem Aufbau wie oben wird also in diesem Fall dasselbe Riemenelastomer für den Unterbau wie für den Riemenrücken verwendet.

Weiter werden in besonderen Ausführungsbeispielen die Zugstränge direkt in das Riemenmaterial, insbesondere das Material des Unterbaus bzw. der Rippen, eingebettet. Dadurch wird nicht ausgeschlossen, dass die Zugträger als solche beschichtet sind.

Der Riemenrücken kann eine Textilauflage, eine poröse Beschichtung oder eine sonstige Auflage tragen.

Die Lösung der Aufgabe umfasst weiterhin einen Keilrippenriemen, wie er mit dem erfindungsgemäßen Verfahren erhalten wurde.

Der Keilrippenriemen, der erhalten und erhältlich ist mit einem Verfahren nach einem der Ansprüche 1 bis 8, besitzt dementsprechend einen Riemenkörper aus wenigstens einem elastomeren Material, auf dessen Kraftübertragungsseite in dem elastomeren Material einer Kraftübertragungszone mehrere längs zum Riemen verlaufende Rillen für den Eingriff einer Keilrippenscheibe eingeformt sind, wobei die Rillen Rippen begrenzen, die mit einer thermoplastischen oder thermoelastischen Rippenbeschichtung versehen sind, wobei der erfindungsgemäße Keilrippenriemen dadurch besonders gekennzeichnet ist, dass die Rippenbeschichtung eine gleichmäßige Schichtdicke mit einer Schichtdicken-Schwankungsbreite von unter 25 %, vorzugsweise unter 15 % und weiter vorzugsweise zwischen 5 % und 10 % besitzt.

Bei den mehreren Rippen handelt es sich um wenigstens 2 Rippen.

Die nebeneinander angeordneten Rippen bilden zwischen sich Rillen. Bei umgekehrter Betrachtung begrenzen die Rillen die Rippen. Es ergibt sich ein Aufbau aus Rippen mit Rippenspitzen, Rippenflanken und Rippengrund, der insgesamt, also lückenlos, von der Rippenbeschichtung bedeckt ist.

Der Keilrippenriemen wurde als Verfahrensprodukt bereits im Rahmen der Verfahrensbeschreibung ausführlich erläutert und muss daher an dieser Stelle nicht gesondert beschrieben werden. Wir beziehen uns vielmehr auf die vorausgegangene Beschreibung, insbesondere in Bezug auf die zu verwendenden Materialien.

Gemäß bevorzugter Ausführungsformen der Erfindung beträgt die mittlere Schichtdicke der Rippenbeschichtung 0,01 bis 1 mm, wie 0,02 bis 0,8 mm, z.B. 0,02 bis 0,2 mm vorzugsweise 0,02 bis 0,08 mm, wie 0,03 bis 0,05 mm.

Im Folgenden wird die Erfindung, insbesondere in Verbindung mit der Zeichnung, anhand von Beispielriemen und deren Testergebnissen näher erläutert. Die Beispiele dienen der Illustration und dem leichteren und anschaulicheren Verständnis der Erfindung und nicht einer Beschränkung des Erfindungsgegenstands, wie er vorstehend umfassend angegeben und erläutert wurde.

Es zeigen:
- Abb. 1: - eine schematische Darstellung des Keilrippenriemens mit Rippenbeschichtung in Schnittansicht, perspektivisch;
- Abb. 2: - den Aufbau eines erfindungsgemäßen Riemenwickels, schematisch skizziert im Querschnitt;
- Abb. 3: - schematische Darstellung der mikroskopischen Struktur des Materials der zellig-porösen Außenschicht;
- Abb. 4: - Rasterelektronen-mikroskopische Aufnahmen der Porenstruktur der
- (a) u. b)): porösen Außenschicht des Riemenwickels (vor Vulkanisation) a) in 430-facher Vergrößerung b) in 85-facher Vergrößerung;
- Abb. 5: - Elektronenmikroskopische Aufnahme eines quer zu den Rippen aufgeschnittenen Keilrippenriemens nach der Erfindung in 33-facher Vergrößerung, Ausschnitt Rippenteil und Rippengrund mit erfindungsgemäßer Beschichtung;
- Abb. 6: - Elektronenmikroskopische Aufnahme eines quer zu den Rippen aufgeschnittenen Vergleichskeilrippenriemens in 33-facher Vergrößerung, Ausschnitt: Rippenteil und Rippengrund mit konventioneller Folienbeschichtung;
- Abb. 7: - Balkendiagramm für den Vergleich poröse gegen nicht-poröse UHMWPE-Folie in der Drehungleichförmigkeitsprüfung;
- Abb. 8: - Balkendiagramm für den Vergleich poröse gegen nicht-poröse UHMWPE-Folie in der Zwangsschlupfprüfung;
- Abb. 9: - Balkendiagramm für den Vergleich poröse gegen nicht-poröse UHMWPE-Folie in der Kälteprüfung unterhalb -30°C;
- Abb. 10: - Aufbau Dauerlauftest mit Drehungleichförmigkeit;
- Abb. 11: - Aufbau Zwangsschlupfprüfung;
- Abb. 12: - Aufbau Kälteprüfung.

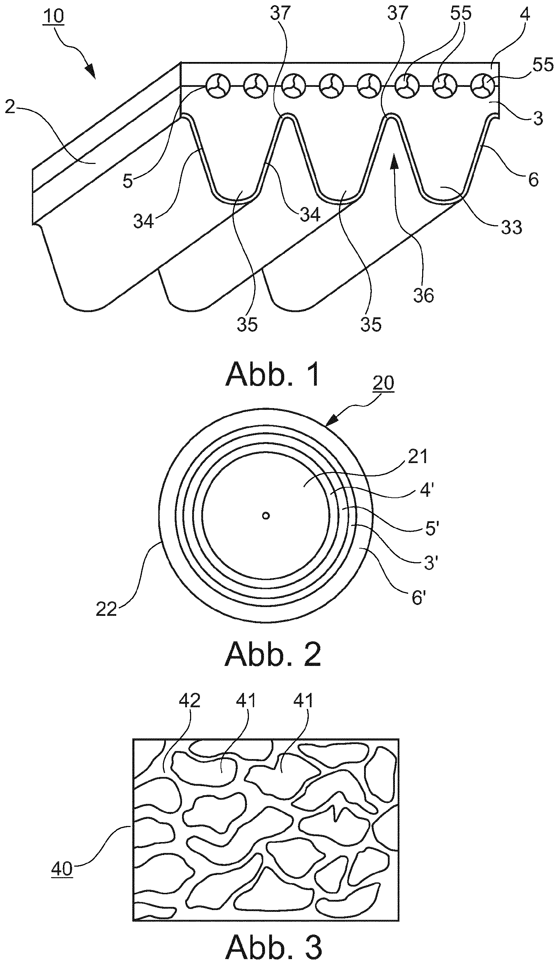

Die Abbildungen 1-3 sind der besseren Anschauung wegen rein schematisch dargestellt und nicht maßstabsgetreu.

Abbildung 1 zeigt ein Ausführungsbeispiel für einen im Ganzen mit 10 bezeichneten Keilrippenriemen nach der Erfindung mit seinen verschiedenen funktionellen Bereichen, die während des Formverfahrens aus den Schichten eines zugehörigen Wickels ausgeformt werden. Ein Riemenkörper 2 besteht im Wesentlichen aus einem oder mehreren elastomeren Materialien, im vorliegenden Fall aus einem Kernbereich oder Unterbau 3 auf der Kraftübertragungsseite, häufig auch als Kompressionszone bezeichnet. An diesem Unterbau 3 des Riemenkörpers 2 sind einzelne Keilrippen 33 ausgebildet - im vorliegenden Fall drei Keilrippen 33. Die Keilrippen 33 besitzen Rippenflanken 34, über die bei Eingriff hier nicht gezeigter Riemenscheiben die Krafteinleitung bzw. Kraftübertragung erfolgt. Die Keilrippen 33 besitzen Rippenspitzen 35, die mehr oder weniger abgeflacht sein können. Zwischen den Keilrippen 33 befinden sich Rillen 36 für den Eingriff einer entsprechenden hier nicht gezeigten Keilrippenscheibe. Die Keilrippenscheiben fügen sich bei Betrieb in die Rillenform ein, ohne den jeweiligen Rippengrund 37 zu berühren, solange der Keilrippenriemen 10 sich im gebrauchsfähigen Zustand befindet.

Auf der Kompressionsseite, d.h. der der Keilrippenscheibe abgewandten Riemenseite, befindet sich ein Riemenrücken 4, der aus demselben Material wie der Unterbau 3 oder aus einem anderen Elastomer gebildet sein kann. Der Riemenrücken 4 kann falls gewünscht mehrschichtig sein. Im vorliegenden Ausführungsbeispiel ist der Riemenrücken 4 eine einschichtige Deckplatte aus einem anderen Elastomer-material als der Unterbau 3. Der Riemenkörper 2 besteht also bezüglich seiner Elastomermaterialien in diesem Beispiel aus dem Unterbau 3 und dem Riemenrücken 4, zwischen denen eine Zugträgerschicht 5 aus spiralförmig gewickelten Zugträgern 55 eingezogen ist. Die Zugträger 55 sind hier ohne gesonderte Einbettungslage verarbeitet; eine gesonderte Zugträgereinbettung wäre ebenfalls möglich.

Dieser soweit konventionell aufgebaute Keilrippenriemen 10 trägt erfindungsgemäß eine Rippenbeschichtung 6, nämlich eine gleichmäßig dicke homogene Oberflächenbeschichtung aus einem thermoplastischen Material auf der Rippenseite. Anstelle des Thermoplasten kann auch ein thermoplastisches Elastomer verwendet werden. Die Rippenbeschichtung 6 kann durch das neue erfindungsgemäße Verfahren sehr dünn ausgeführt werden und liegt, wie gezeigt, komplett haftend auf den Keilrippen 33 und in den Rillen 36 auf. Durch den Formvorgang wurde die ursprünglich poröse Schicht erweicht bzw. aufgeschmolzen, wobei die ursprüngliche Porosität wenigstens teilweise verloren geht. Die mit dem Verfahren erzeugte Rippenbeschichtung 6 ist nicht porös oder besitzt eine gegenüber der ursprünglichen Porosität der entsprechenden Schicht im Konfektions-Aufbau eine sehr deutlich verringerte Porosität bei stark verkleinerten Poren. Die Rippenbeschichtung 6 ist von gleichmäßiger Dicke und makroskopisch homogener Beschaffenheit.

Abbildung 2 zeigt einen Riemenwickel 20, für den Schichten des für den Keilrippenriemen 10 benötigten Materials auf eine zylindrische Konfektions-Trommel 21 (bzw. eine entsprechende zylindrische Hülse oder unmittelbar die Innenform für das spätere Prägeverfahren) aufgebracht wurden. Die verschiedenen Schichten 3', 4', 5', 6' sind in dieser Abbildung entsprechend den späteren Bauteilen im Keilrippenriemen 10 bezeichnet: Zuerst wird auf die Konfektions-Trommel 21 eine Schicht 4' für den Riemenrücken 4 aufgebracht. Hierfür kann eine Hülse auf die Konfektions-Trommel 21 aufgezogen werden oder die Schicht 4' kann um die Konfektions-Trommel gewickelt werden. Auf die Hülse wird dann der Zugträgerstrang (Cord) 55 spiralförmig aufgewickelt und bildet die Schicht 5', die sogenannte Zugeinbettungsschicht, die zusammen mit der Rückenschicht 4' während des Präge- oder Formvorgangs im Wesentlichen so erhalten bleiben wird. Die Konfektions-Trommel 21 trägt weiter eine auf die Zugträgerschicht 5' aufgebrachte Kernschicht 3' in einer Dicke, die ausreicht, in diese Schicht die späteren Keilrippen 33 einzuprägen. Oberhalb der Kernschicht 3' liegt die Schicht 6' für die Ausbildung der späteren Rippenbeschichtung 6 als eine Außenschicht auf. Diese zellig-poröse Außenschicht 6' kann ein- oder mehrschichtig auf den Konfektionswickel 21 gewickelt worden sein, um eine bestimmte Schichtdicke der porösen Außenschicht 6' mit Zellstruktur (zellig-porös) zu ergeben. Die Gesamtheit der koaxialen tubulären Schichten 4', 5', 3' und 6', in der Reihenfolge von innen nach außen, bilden den Riemenwickel 20, auch als Konfektionswickel bezeichnet. Je nach konkretem Ablauf des Formverfahrens wird der Riemenwickel 20 nach seinem Aufbau von der Konfektions-Trommel 21 abgenommen und in eine Formvorrichtung verbracht, sofern nichts anderes vorgesehen und die Konfektions-Trommel selbst beispielsweise expandierbar ist und in eine Außenform eingesetzt wird.

In einem üblichen Formverfahren, wie es hier verwendet wird, wird der Riemenwickel 20 von der Konfektions-Trommel 21 abgenommen und innerhalb einer außen profilierten Vulkanisationsform positioniert. Danach geschieht das Formen in der Vulkanisationsform, indem von innen mit einer expandierbaren zylindrisch wirkenden Innenform, z.B. einer Hydromanschette, ein radial nach außen wirkender Druck auf den Riemenwickel 20 aufgebracht wird. Das Heizen für ein Heißverformen des Riemenwickels zum Riemen erfolgt unmittelbar über die profilierte Außenform, die Vulkanisationsform.

Nach Abkühlen des Riemenwickels und Entformen erfolgt das Schneiden des Riemenwickels 20 auf entsprechende Riemenbreite, beispielsweise eine Breite von drei Rippen, wie zuvor in Abbildung 1 gezeigt.

Abbildung 3 zeigt eine Skizze, die die Struktur der porösen Außenschicht 6' mit Zellstruktur (d.h., der zellig-porösen Schicht) des Riemenwickels 20 verdeutlichen soll. In einer schematischen Querschnittsansicht und stark vergrößert sind einzelne Poren 41 der Schichtstruktur 40 zu erkennen. Zwischen den Poren 41 befinden sich Zellwände 42, sodass sich insgesamt eine zellige Schaumstoffstruktur ergibt, die offenzellig oder geschlossenzellig sein kann. Abbildung 3 ist diesbezüglich stark vereinfacht.

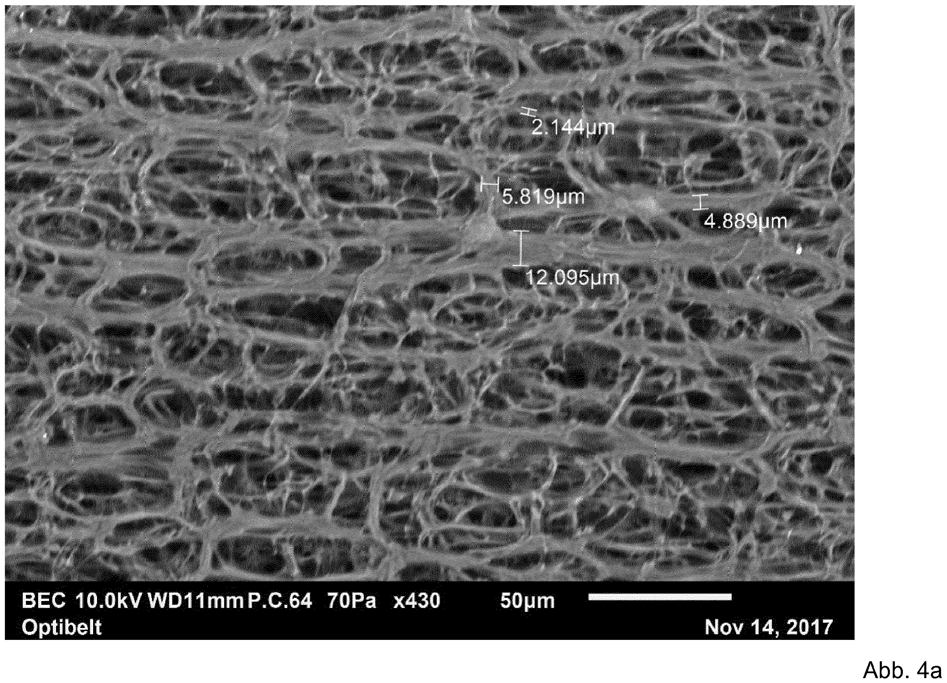

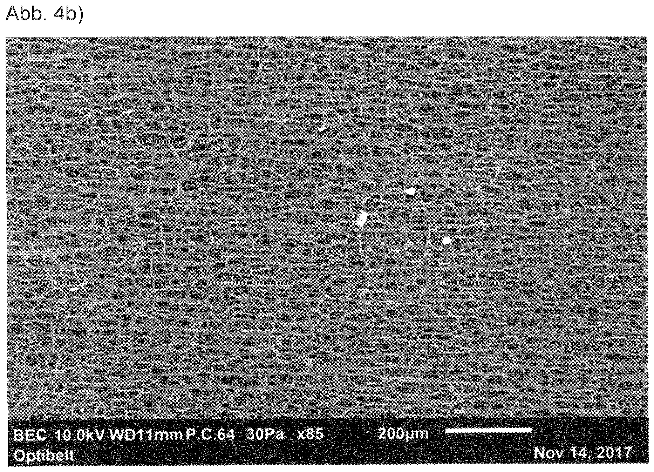

Abbildung 4 zeigt Rasterelektronen-mikroskopische Aufnahmen von Querschnitten poröser, Thermoplastfolien aus UHMWPE, wie sie in den Beispielen für die zellig-porösen Außenschichten 6' nach der Erfindung verwendet werden. Wie zu erkennen, handelt es sich um Zellstrukturen mit vergleichsweise dünnen Zellwänden. Die in den Rasterelektronen-mikroskopischen Aufnahmen gezeigten Beispielfolien besitzen eine Porosität von 83 %. Abbildung 4 b) zeigt dieselbe geschnittene Folie wie Abbildung 4 a), lediglich in geringerer Vergrößerung. Im Erweichungsbereich verliert die Folie ihre Porosität wenigstens teilweise, wobei vermutlich sehr kleine Gasbläschen erhalten bleiben können.

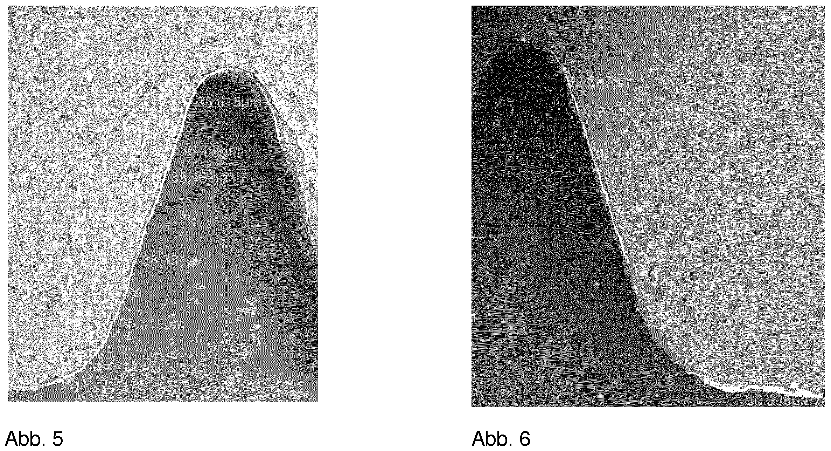

Abbildungen 5 und 6 zeigen Ausschnitte aus Draufsichten auf jeweils quer geschnittene Keilrippenriemen.

Abbildung 5 zeigt die Draufsicht auf einen Schnitt quer zu den Rippen in einem Ausschnitt, der den Teil einer Rippe von der Rippenspitze bis einschließlich (rechts) angrenzendem Rippengrund zeigt. Wie zu erkennen, ist die erzeugte, nicht mehr poröse UHMWPE-Beschichtung von besonders gleichmäßiger Dicke. Die Anbindung der Beschichtung an die Rippe ist ebenfalls ausgezeichnet und zeigt keinerlei Mängel oder Fehlstellen. Die Schichtdicke der aufgelegten porösen UHMWPE-Folie betrug im Ausgangszustand 250 µm. Während des Formens des Keilrippenriemens schmilzt die poröse Folie auf den Rippen auf und in sich zusammen. Die Schichtdicke der fertigen Rippenbeschichtung beträgt danach zwischen etwa 30 und 40 µm.

Abbildung 6 zeigt eine entsprechende Ansicht eines Bildausschnitts von Rippenspitze bis einschließlich (links) an die Rippe angrenzendem Rippengrund, jedoch nun an einem geschnittenen Vergleichsriemen, dessen Rippen eine Beschichtung tragen, die aus konventioneller, nicht poröser UHMWPE-Folie gebildet wurde. Die Schichtdicke der nicht-porösen Folie betrug im Ausgangszustand 50 µm. Auch diese Folie schmilzt während des Formvorgangs auf den Rippen auf, verteilt sich dabei aber durch den Fluss des Rippenmaterials und die dadurch ausgelöste Scherwirkung entlang der Rippenkontur sehr ungleichmäßig. Am fertigen Keilrippenriemen ergaben sich Schichtdicken von unter 30 µm im Rippengrund bis ca. 60 µm auf den Rippenspitzen.

### Beispiel

### Aufbau und Materialien eines Beispielriemens

Für Riemenrücken und Unterbau wurde dasselbe Riemenelastomer verwendet, nämlich ein übliches für Keilrippenriemen geeignetes EPDM.

Für die Zugträgerlage wurden spiralförmig gewickelte Polyestercordstränge verwendet, die unmittelbar auf die Rückenschicht gewickelt und mit dem Material für den Unterbau abgedeckt wurden. Es handelte sich um kommerziell erhältliche Polyestercorde, die für den Riemenbau angeboten werden und geeignet sind.

Für die Rippenbeschichtung wurde eine geschäumte UHMWPE-Folie mit folgenden Spezifikationen verwendet:

| | |
|---|---|
| Dichte des reinen PE: | 0,97 g/cm³ |
| Schmelzpunkt: | 135°C |
| Molekulargewicht: | > 3000000 (MWₙ) |
| Oberflächengewicht der Folie | 40 g/m² |
| Porosität: | 83 % |
| Folienstärke: | 250 µm |
| Luftdurchlässigkeit: | Gurley Zahl: 3 (Sekunden/50 ml Durchstrom) |

Die poröse UHMWPE-Folie verdichtete sich während des Heißform-Herstellungsverfahrens nach der Erfindung auf eine Schichtdicke von ca. 40 µm. Daher wurden Vergleichsversuche mit einer Beschichtung aus nicht-geschäumter und damit nicht-poröser UHMWPE-Folie aus dem entsprechenden Basismaterial durchgeführt, wobei als nicht-poröse Vergleichsfolie eine Folie mit einer Schichtdicke von 50 µm gewählt wurde, die zu einer Beschichtung mit Schichtdicken, die zwischen 30 µm und 60 µm schwankten (s.o., zu Abb. 6), zusammenschmolz.

Überraschenderweise wurde gefunden, dass der erfindungsgemäß hergestellte Keilrippenriemen im Vergleich zu einem Keilrippenriemen mit einer nicht-porösen thermoplastischen Beschichtung ein gutes Geräuschverhalten bei gleichzeitig verbesserten dynamischen Eigenschaften zeigt. Wesentliche Vorteile ergaben sich bei der Hitzebeständigkeit, der Kältebeständigkeit und der Verschleißfestigkeit.

### Tests

Zur Überprüfung der Eigenschaften der neuen, erfindungsgemäßen Riemen wurden verschiedene Tests durchgeführt, die Aufschluss über das Verhalten bei Betrieb unter verschiedenen Belastungen geben. Unter anderem wurde ein Dauerlauftest mit Drehungleichförmigkeit, eine Zwangsschlupfprüfung und eine Kälteprüfung durchgeführt, wie nachfolgend dokumentiert.

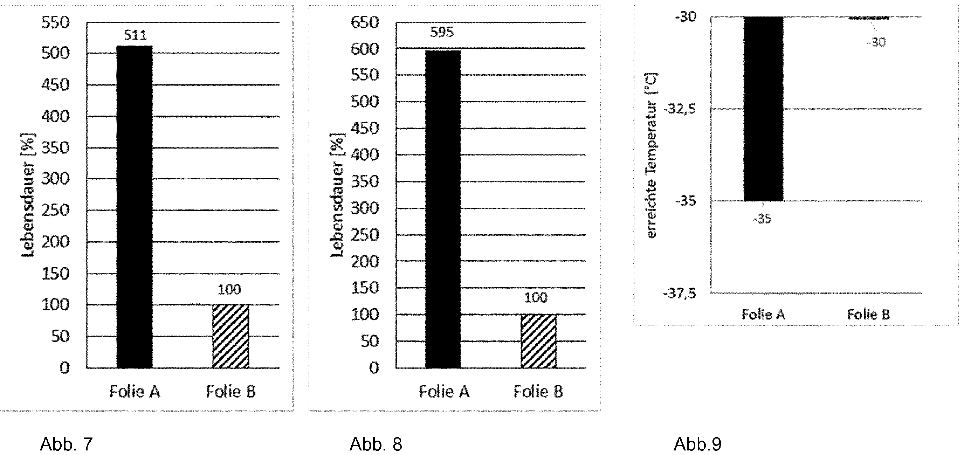

Die zugehörigen Prüfergebnisse sind den Abbildungen 7, 8 und 9 zu entnehmen. Die Ergebnisse sprechen für sich und belegen die guten Betriebseigenschaften des mit der neuen Beschichtung versehenen Keilrippenriemens. Der erfindungsgemäße Keilrippenriemen mit Folie A zeigt in den Tests die genannten Ausfallerscheinungen nach einem Vielfachen der Prüfdauer im Vergleich zu einem Keilrippenriemen mit Folie B.

### Legende zu den Balkendiagrammen Abbildungen 7 bis 9:

Abb. 7: Dauerlauftest mit Drehungleichförmigkeit, Abb. 8: Zwangsschlupfprüfung,
Abb. 9: Kälteprüfung:
Folie A = Versuche am Riemen mit erfindungsgemäßer poröser Beschichtungsfolie;
Folie B = Versuche am Riemen mit nicht-poröser Vergleichs-Beschichtungsfolie.

### Testaufbauten

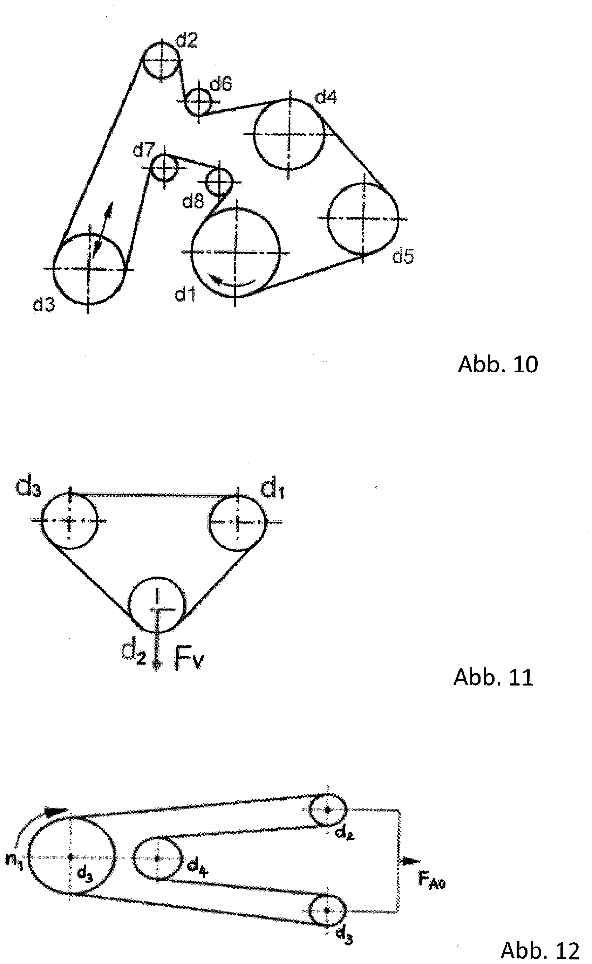

Abbildung 10 zeigt den Aufbau für den Test "Dauerlauf mit Drehungleichförmigkeit", der mit folgenden Spezifikationen durchgeführt wurde (Scheiben/Rollen sind mit d1 bis d8 bezeichnet):

### "Dauerlauf mit Drehungleichförmigkeit"

- Bremsleistung: 12 kW
- Temperatur Raum: 120 °C
- Drehzahl: 2000 U/min
- Prüfkriterium: Laufzeit bis Ausfall
Ausfall: Folienablösung, Cordauslösung, max. 2 Rippenbrüche

Abbildung 11 zeigt den Aufbau für den Test "Zwangsschlupfprüfung", der mit folgenden Spezifikationen durchgeführt wurde (3 Scheiben d1 bis d3):

### "Zwangsschlupfprüfung"

- Schlupf zwischen d1 und d3 ca. 5,6 %
- Raumtemperatur
- Drehzahl: 2105 U/min
- Prüfkriterium: Laufzeit bis Ausfall
Ausfall: Folienablösung, Cordauslösung, Rippenabriss

Abbildung 12 zeigt den Aufbau für den Test "Kälteprüfung", der mit folgenden Spezifikationen durchgeführt wurde (Antriebsscheibe d1, Scheiben/Rollen d2 bis d4):

### "Kälteprüfung"

- Absenken der Temp. um 2,5°C nach 100 Zyklen.
- Zyklusdauer: 10 sec.
- Drehzahl: 1000U/min
- Prüfkriterium: erreichte Temperatur bei Ausfall
Ausfall: erster Rippenbruch

### Bezugszeichenliste

- 2: Riemenkörper
- 3: Unterbau
- 4: Riemenrücken
- 5: Zugträgerschicht
- 6: Rippenbeschichtung
- 10: Keilrippenriemen

- 20: Riemenwickel
- 21: Konfektions-Trommel
- 22: äußere Oberfläche des Riemenwickels

- 33: Keilrippe
- 34: Rippenflanke
- 35: Rippenspitze
- 36: Rille
- 37: Rippengrund

- 40: Schichtstruktur
- 41: Poren
- 42: Zellwände

- 55: Zugträger (Kord)

## Patentansprüche

1. Verfahren zur Herstellung eines Keilrippenriemens (10) mit einer Rippenbeschichtung (6) in einem Formverfahren,
bei dem ein mehrschichtiger, schlauchförmiger Riemenwickel (20), der wenigstens eine Schicht (3',4') aus einem zu einem Elastomer härtbaren Material für die Ausbildung eines Riemenkörpers (2) und daran ausgebildeter Keilrippen (33) aufweist, in einer Form mit einer Struktur für ein Formen der Keilrippen (33) zwischen einer im Wesentlichen zylindrischen Innenform und einer konzentrisch dazu angeordneten hülsenförmigen Außenform unter Anwendung von Wärme zu einem Riemenrohling oder dem Keilrippenriemen (10) geformt wird, **dadurch gekennzeichnet, dass**
die Außenform die Struktur für das Formen der Keilrippen (10) an ihrer Hülseninnenfläche aufweist,
dass eine äußere Oberfläche des Riemenwickels (20) und die Struktur der Hülseninnenfläche der Außenform gegeneinander gepresst werden, wobei wenigstens die Außenform beheizt wird,
dass der Riemenwickel (20) an seiner äußeren Oberfläche (22), auf einer Schicht (3'), aus der die Keilrippen (33) ausgeformt werden, eine zellig-poröse Außenschicht (6') besitzt und
dass die zellig poröse Außenschicht (6') während des Formens unter wenigstens teilweisem Verlust ihrer Porosität erweicht oder aufgeschmolzen wird, um an dem entformten Keilrippenriemen (10) die Rippenbeschichtung (6) zu bilden.

2. Verfahren nach Anspruch 1, **dadurch gekennzeichnet, dass** der Riemenwickel (20) während des Formens radial nach außen expandiert und gegen die Struktur der Hülseninnenfläche der Außenform gepresst wird.

3. Verfahren nach Anspruch 1 oder 2, **dadurch gekennzeichnet, dass** die Porosität der zellig-porösen Außenschicht (6') wenigstens 10 % beträgt, bevorzugt 10 % - 90%.

4. Verfahren nach einem der Ansprüche 1 bis 3, **dadurch gekennzeichnet, dass** die zellig-poröse Außenschicht (6') des Riemenwickels (20) aus einer zellig-porösen Folie gebildet wird.

5. Verfahren nach Anspruch 4, **dadurch gekennzeichnet, dass** die zellig-poröse Folie eine Polyethylenfolie, vorzugsweise eine UHMWPE-Folie ist.

6. Verfahren nach einem der Ansprüche 1 bis 5, **dadurch gekennzeichnet, dass** die zellig-poröse Außenschicht (6') mit einer Dicke von 0,015 bis 1,2 mm in dem Riemenwickel (20) eingesetzt wird.

7. Verfahren nach einem der Ansprüche 1 bis 6, **dadurch gekennzeichnet, dass** die erzeugte Rippenbeschichtung (6) eine Dicke von 0,01 bis 1 mm aufweist.

8. Verfahren nach einem der Ansprüche 1 bis 7, **dadurch gekennzeichnet, dass** der mehrschichtige Riemenwickel (20) von innen nach außen folgenden Aufbau zeigt:
- eine Rückenschicht (4') aus einem zu einem Elastomer härtbaren Material, vorzugsweise einem Kautschuk oder Synthesekautschuk;
- eine Zugträgerschicht (5')
- eine Kernschicht (3') für die Ausbildung eines Unterbaus (3) mit darin integrierten Keilrippen (33), die während des (Heiß-)Formens als Struktur aus Rippen (33) und Rillen (36) in die erweichte Kernschicht (3') eingeprägt werden;
- eine zellig-poröse Außenschicht (6'), aus der durch Erweichen und/oder Aufschmelzen während des Formens eine Rippenbeschichtung (6) gebildet wird.

9. Keilrippenriemen (10) erhältlich mit einem Verfahren nach einem der Ansprüche 1 bis 8, mit einem Riemenkörper (2) aus wenigstens einem elastomeren Material, auf dessen Kraftübertragungsseite in dem elastomeren Material einer Kraftübertragungszone mehrere längs zum Riemen (10) verlaufende Rillen (36) für den Eingriff einer Keilrippenscheibe eingeformt sind, wobei die Rillen (36) Rippen (33) begrenzen, die mit einer thermoplastischen oder thermoelastischen Rippenbeschichtung (6) versehen sind, **dadurch gekennzeichnet, dass** die Rippenbeschichtung (6) eine gleichmäßige Schichtdicke mit einer Schichtdicken-Schwankungsbreite von unter 25 % besitzt.

10. Keilrippenriemen (10) nach Anspruch 9, **dadurch gekennzeichnet, dass** die mittlere Schichtdicke der Rippenbeschichtung (6) 0,01 bis 1 mm beträgt.
